Europäisches Patentamt

European Patent Office

Office européen des brevets

(19)

(11) Veröffentlichungsnummer : **0 149 026
B1**

(12)                    EUROPÄISCHE PATENTSCHRIFT

(45) Veröffentlichungstag der Patentschrift :
15.03.89

(21) Anmeldenummer : 84112644.4

(22) Anmeldetag : 19.10.84

(51) Int. Cl.⁴ : **B 60 B   3/08**, B 60 B   5/02

(54) Scheibenrad.

(30) Priorität : 16.12.83 DE 3345555

(43) Veröffentlichungstag der Anmeldung :
24.07.85 Patentblatt 85/30

(45) Bekanntmachung des Hinweises auf die Patenterteilung : 15.03.89 Patentblatt 89/11

(84) Benannte Vertragsstaaten :
AT BE CH FR GB IT LI SE

(56) Entgegenhaltungen :
FR-A- 909 095
GB-A- 1 380 267
US-A- 1 435 530
US-A- 4 200 326

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Nowak, Franz
Edelweissstrasse 68
D-8028 Taufkirchen (DE)**
Erfinder : **Gietl, Albert
Bräuhausgasse 16
D-8204 Brannenburg (DE)**
Erfinder : **Leo, Rolf
Altdorfer Strasse 8
D-8857 Wertingen (DE)**
Erfinder : **Singer, Gerhard
St. Cajetan Strasse 4
D-8000 München 80 (DE)**

EP 0 149 026 B1

Jouve, 18, rue St-Denis, 75001 Paris, France

**Beschreibung**

Die Erfindung bezieht sich auf ein Scheibenrad gemäß dem Oberbegriff des Patentanspruchs 1.

Derartige Scheibenräder, z. B. Eisenbahnräder oder Zahnräder mit großem Durchmesser, wurden in der Vergangenheit vorwiegend einstückig aus isotropen, d. h. in allen Raumrichtungen gleiche Eigenschaften zeigenden Werkstoffen, insbesondere aus Metallen gefertigt. Wenn auf derartige Scheibenräder Lasten in verschiedenen Richtungen wirken, so z. B. bei Eisenbahnrädern während des Betriebes Kräfte in radialer und axialer und Umfangsrichtung, so können die hierbei auftretenden deutlich unterschiedlichen Festigkeits- und Steifigkeitsanforderungen bisher nur ungenügend differenziert angepaßt werden. Weiterhin sind derartige Scheibenräder in monolithischer Bauweise relativ voluminös und damit schwer. Hinzu kommt, daß praktisch keine Strukturdämpfung vorhanden ist, so daß z. B. derartige metallische Eisenbahnräder während des Betriebes intensiv Schall abstrahlen, hierbei besonders im Bereich höherer Frequenzen. Eine solche Lärmbelastung kann nur mit großem technischen Aufwand reduziert werden.

Um das Gewicht insbesondere von Eisenbahnrädern zu verringern und die während des Betriebes auftretenden Lärmbelästigungen zu reduzieren, ist in der EP-A-0065086 ein Scheibenrad aus einem Verbund von Metall und faserverstärkten Werkstoffen vorgeschlagen worden. Dieses Scheibenrad weist eine metallische Nabe und einen metallischen Radreifen auf, die durch eine biegesteife Radscheibe aus faserverstärkten Werkstoffen miteinander verbunden sind. Die Radscheibe selbst besteht aus zwei Deckscheiben und einem dazwischen gelagerten schubsteifen Schubübertragungskörper, die jeweils mit der Radnabe und dem Radreifen verbunden sind. In dieser Patentanmeldung ist auch vorgeschlagen, sowohl Radnabe als auch Radreifen aus faserverstärkten Werkstoffen zu fertigen.

Durch die Verbindung von Radnabe und Radreifen über faserverstärkte Werkstoffe können sowohl das Gewicht als insbesondere auch das Schwingungsverhalten des Rades während des Betriebes gegenüber herkömmlichen monolithischen metallischen Scheibenrädern verbessert werden.

Dieses bekannte Scheibenrad kann, wie in der europäischen Patentanmeldung erläutert, insbesondere in dem Schwingungsverhalten während des Betriebes verbessert werden. Die Radnabe und der Radreifen sind hierbei durch eine Sternanordnung von Speichen aus faserverstärkten Werkstoffen verbunden. Die Speichen sind aus faserverstärkten Werkstoffen schlaufenförmig gewickelt. Die Anzahl der Speichen ist so bestimmt und die Wicklung der Speichen so aufgebaut, daß die niedrigst vorgegebene Eigenfrequenz des Scheibenrades gedämpft wird. Dieses Scheibenrad ist besonders gut für Eisenbahnräder geeignet, ist leicht und weist nur ein geringes Betriebsgeräusch auf.

Der Erfindung liegt die Aufgabe zugrunde, für ein Scheibenrad der in Rede stehenden Art einen einfachen Konstruktionsaufbau anzugeben, wobei die Möglichkeit gegeben wird, das Scheibenrad in Festigkeit und Steifigkeit an die jeweilig auftretenden Lastrichtungen anzupassen.

Diese Aufgabe ist gemäß der Erfindung durch die im kennzeichnenden Teil des Patentanspruches 1 angegebenen Merkmale gelöst.

Demgemäß ist ein Scheibenrad aus folgenden Einzelteilen zusammengesetzt :

Zwei Nabenhälften, die jeweils an ihren axial äußeren Rändern Umfangsflansche aufweisen ;

Zwei mit den Umfangsflanschen der Radnabe jeweils in einer zweischnittigen Verbindung verbundenen Deckscheiben ;

Einem zwischen den Deckscheiben gelagerten schubsteifen Schubübertragungskörper, wobei Deckscheiben und Schubübertragungskörper gemeinsam die Radscheibe bilden ;

Einem Radreifen, der direkt mit den beiden Deckscheiben und dem Schubübertragungskörper verbunden ist.

Nabe und Radreifen sind z. B. im Falle eines Eisenbahnrades aus Metall, während die Deckscheiben aus faserverstärkten Werkstoffen gefertigt und der Schubübertragungskörper eine schubsteife Wabenstruktur aus Kunststoff oder Aluminium ist.

Ein Scheibenrad gemäß der Erfindung besteht aus nur sechs Einzelteilen, die einfach zu dem Scheibenrad zusammengefügt werden können. Die Einzelteile werden vorzugsweise sämtlich miteinander verklebt.

Die beiden Deckscheiben aus faserverstärkten Werkstoffen bilden zusammen mit dem dazwischenliegenden Schubübertragungskörper eine biegesteife Platte, wobei die axialen Kräfte vom Radreifen über den Schubübertragungskörper als Schub direkt in die beiden Nabenhälften eingeleitet werden. Alle radialen Kräfte und Torsionskräfte bei Belastung des Scheibenrades werden über die zweischnittige Verbindung zwischen Deckscheiben und Radnabe in letztere eingeleitet. Die Radnabe aus den beiden Nabenhälften wird üblicherweise, insbesondere für ein Eisenbahnrad, aus Metall gefertigt werden, da für kraft- bzw. formschlüssige Verbindungen zwischen Radnabe und einer Welle ein isotroper Werkstoff vorteilhaft ist. Geteilte Radnaben sind an sich, z. B. aus der FR-A-909 045, bekannt.

Ein Scheibenrad gemäß der Erfindung hat hohe Festigkeit, sehr gute Laufeigenschaften, geringes Gewicht, hohe Biege- und Schubsteifigkeit sowie hohe Schwingungsdämpfung sowohl im niederfrequenten Bereich als auch im Schallbereich.

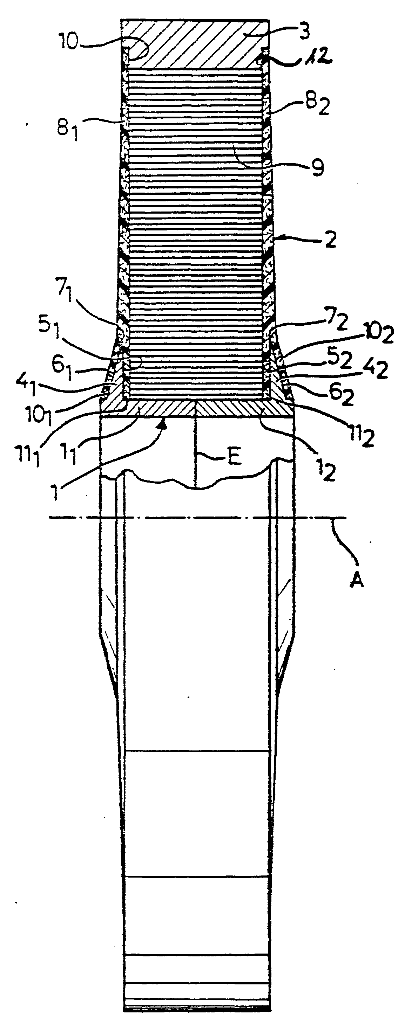

Weitere Ausgestaltungen der Erfindung gehen aus den Unteransprüchen hervor. Die Erfindung ist in einem Ausführungsbeispiel anhand der einzigen Figur näher erläutert, die einen Teilquerschnitt durch ein Scheibenrad gemäß der Erfindung zeigt.

Das Scheibenrad mit der Radachse A weist eine Radnabe 1 aus Metall, eine Radscheibe 2 aus Verbundmaterial und einen Radreifen 3 aus Metall auf. Der Radreifen 3 ist z. B. ein Spurkranz eines Eisenbahnrades. Die Radscheibe 2 verbindet Radnabe 1 und Radreifen 3.

Die Radnabe 1 ist aus zwei Nabenhälften $1_1$ und $1_2$ zusammengesetzt, die spiegelsymmetrisch zu der mittleren Radialebene E des Scheibenrades sind.

Beide Nabenhälften $1_1$ und $1_2$ tragen jeweils an ihren axial außen liegenden Rändern einen im Querschnitt dreieckförmigen Flansch $4_1$, $4_2$, dessen axial innen liegende Seitenfläche $5_1$ bzw. $5_2$ senkrecht zur Radachse verläuft, wohingegen die andere, axial außen liegende Seitenfläche $6_1$ bzw. $6_2$ unter einem spitzen Winkel gegen die jeweils innere Seitenfläche $5_1$ bzw. $5_2$ angestellt ist. Die axial inneren und äußeren Seitenflächen $5_1$, $5_2$ und $6_1$, $6_2$ schneiden sich in einer radial nach außen weisenden Umfangskante $7_1$ bzw. $7_2$.

Die Radscheibe 2 ist aus zwei Deckscheiben $8_1$ und $8_2$ aus faserverstärkten Werkstoffen sowie aus einem zwischen diesen Deckscheiben liegenden Schubübertragungskörper 9 zusammengesetzt. Die Deckscheiben $8_1$, $8_2$ sind an ihrem, der Radnabe 1 zugewandten Rand aufgeschlitzt und in jeweils zwei Umfangslappen $10_1$, $11_1$ bzw. $10_2$, $11_2$ aufgeteilt. Die Umfangslappen $10_1$, $10_2$ liegen an den axial äußeren Seitenflächen $6_1$, $6_2$ der Umfangsflansche $4_1$, $4_2$ an, während die Umfangslappen $11_1$, $11_2$ an den axial innen liegenden Seitenflächen $5_1$, $5_2$ der Umfangsflansche $4_1$, $4_2$ anliegen. Im Bereich der Umfangsflansche sind diese mit den Umfangslappen der Deckscheiben verklebt.

Der Schubübertragungskörper 9 ist ein schubsteifer Wabenkörper aus Kunststoff oder Aluminium und mit den beiden Deckscheiben $8_1$, $8_2$ sowie den beiden Nabenhälften $1_1$, $1_2$ verklebt. Der Schubübertragungskörper 9 reicht nicht ganz bis an den äußeren Umfang der Deckscheiben $8_1$, $8_2$.

In die radial innen liegenden Seitenflächen des Radreifens 3 sind radial innen liegende Nuten 12 eingeschnitten, in die sich die Deckscheiben $8_1$, $8_2$ einlegen. Der Radreifen 3 ist mit den Deckscheiben $8_1$, $8_2$ und mit dem äußeren Umfang des Schubübertragungskörpers 9 mit einem Kleber verbunden.

Deckscheiben $8_1$, $8_2$ und Schubübertragungskörper 9 sind eine biegesteife Platte, über die die axial wirkenden Kräfte vom Radreifen 3 als Schub direkt in die beiden Nabenhälften $1_1$, $1_2$ eingeleitet werden. Die zweischnittige Klebeverbindung zwischen den Flanschen $4_1$, $4_2$ und den Deckscheiben $8_1$, $8_2$ im Bereich der Umfangslappen $10_1$, $10_2$ und $11_1$, $11_2$ leitet die radialen Kräfte und Torsionskräfte beim Betrieb des Scheibenrades in die geteilte Radnabe 1 ein. Durch den Verbund der Radscheibe 2 aus Deckscheiben $8_1$, $8_2$ aus faserverstärkten Werkstoffen und Schubübertragungskörper 9 in Form einer Wabenstruktur aus Aluminium oder Kunststoff können die Festigkeit und die Steifigkeit des gesamten Scheibenrades entsprechend den Anforderungen in den jeweiligen Lastrichtungen gezielt festgelegt werden. Hierdurch werden optimale Rolleigenschaften des Scheibenrades erzielt.

Bei dem beschriebenen Scheibenrad füllt der Schubübertragungskörper den Raum zwischen Nabe, Radscheiben und Radreifen vollständig aus. Er kann jedoch auch aus mehreren Einzelteilen bestehen, z. B. mehreren mit Radnabe, Radscheiben und Radreifen verbundenen Schub übertragenden Stegen. Auch eine Ausbildung in Schaum ist möglich.

**Patentansprüche**

1. Scheibenrad mit einer Radnabe (1), einem Radreifen (3) und einer Radnabe (1) und Radreifen (3) verbindenden biegesteifen Radscheibe, wobei die Radscheibe aus zwei Deckscheiben ($8_1$, $8_2$) und einem dazwischen gelagerten schubsteifen Schubübertragungskörper (9) besteht und Radreifen (3) und Radnabe (1) sowohl mit den Deckscheiben ($8_1$, $8_2$) als auch mit dem Schubübertragungskörper (9) verbunden sind, dadurch gekennzeichnet, daß die Radnabe (2) in axialer Richtung in zwei spiegelsymmetrisch gleiche Nabenhälften ($1_1$, $1_2$) unterteilt ist, die jeweils an den axial äußeren Rändern Umfangsflansche ($4_1$, $4_2$) aufweisen, und daß die Deckscheiben ($8_1$, $8_2$) jeweils in einer zweischnittigen Verbindung ($4_1$, $5_1$, $6_1$, $7_1$ ; $4_2$, $5_2$, $6_2$, $7_2$) mit den Umfangsflanschen ($4_1$, $4_2$) verbunden sind.

2. Scheibenrad nach Anspruch 1, dadurch gekennzeichnet, daß das Scheibenrad aus einem Verbund aus Metall und faserverstärkten Werkstoffen hergestellt ist, wobei die Nabenhälften ($1_1$, $1_2$) mit den Umfangsflanschen ($4_1$, $4_2$) und der Radreifen (3) aus Metall und die Deckscheiben ($8_1$, $8_2$) aus faserverstärkten Werkstoffen hergestellt sind.

3. Scheibenrad nach Anspruch 1 oder 2, dadurch gekennzeichnet, daß die Umfangsflansche ($4_1$, $4_2$) Dreiecksquerschnitt haben und jeweils eine radial nach außen weisende, der Dreiecksspitze zugeordnete Umfangskante ($7_1$, $7_2$) aufweisen, und daß die Deckscheiben ($8_1$, $8_2$) im Bereich der Umfangsflansche ($4_1$, $4_2$) in radialer Richtung in zwei Umfangslappen ($10_1$, $11_1$ ; $10_2$, $11_2$) geteilt sind, die sich an die radial nach außen weisenden Seitenflächen ($5_1$, $6_1$ ; $5_2$, $6_2$) der Umfangsflansche ($4_1$, $4_2$) anlegen.

4. Scheibenrad nach Anspruch 3, dadurch gekennzeichnet, daß jeweils die axial innen liegende Seitenfläche ($5_1$, $5_2$) der Umfangsflansche ($4_1$, $4_2$) senkrecht zur Radachse (A) verläuft und die axial außen liegende Seitenfläche ($6_1$, $6_2$) der Umfangsflansche ($4_1$, $4_2$) einen kleinen spitzen Winkel gegenüber der radialen Seitenfläche ($5_1$, $5_2$) einnimmt.

5. Scheibenrad nach einem der vorhergehenden Ansprüche, dadurch gekennzeichnet, daß die Einzelteile ($1_1$, $1_2$, $8_1$, $8_2$, 9, 3) des Scheibenrades untereinander verklebt sind.

**Claims**

1. A disc wheel having a wheel hub (1), a wheel tyre (3) and a flexurally-stiff wheel disc which connects the wheel hub (1) and the wheel tyre (3), in which respect the wheel disc consists of two cover discs ($8_1$, $8_2$) and a shear-resistant thrust transmission body (9) mounted therebetween and the wheel tyre (3) and the wheel hub (1) are connected both to the cover discs ($8_1$, $8_2$) and to the thrust transmission body (9), characterised in that the wheel disc (2) is subdivided in the axial direction into two mirror-symmetrically identical hub halves ($1_1$, $1_2$) which respectively have at the axially outer edges peripheral flanges ($4_1$, $4_2$), and in that the cover discs ($8_1$, $8_2$) are respectively connected in a double-cut connection ($4_1$, $5_1$, $6_1$, $7_1$ : $4_2$, $5_2$, $6_2$, $7_2$) to the circumferential flanges ($4_1$, $4_2$).

2. A disc wheel according to claim 1, characterised in that the disc wheel is produced from a composite of metal and fibre-reinforced materials, in which respect the hub halves ($1_1$, $1_2$) with the peripheral flanges ($4_1$, $4_2$) and the wheel tyre (3) are produced from metal and the cover discs ($8_1$, $8_2$) are produced from fibre-reinforced materials.

3. A disc wheel according to claim 1 or 2, characterised in that the peripheral flanges ($4_1$, $4_2$) have a triangular cross-section and respectively have a radially outwardly pointing circumferential edge ($7_1$, $7_2$) associated with the apex of the triangle, and in that the cover discs ($8_1$, $8_2$) are divided in the region of the peripheral flanges ($4_1$, $4_2$) in the radial direction into two circumferential lugs ($10_1$, $11_1$ ; $10_2$, $11_2$) which apply themselves to the radially outwardly pointing side surfaces ($5_1$, $6_1$ ; $5_2$, $6_2$) of the peripheral flanges ($4_1$, $4_2$).

4. A disc wheel according to claim 3, characterised in that respectively the axially inwardly lying side surface ($5_1$, $5_2$) of the peripheral flanges ($4_1$, $4_2$) extends perpendicularly to the wheel axis (A) and the axially outwardly lying side surface ($6_1$, $6_2$) of the peripheral flanges ($4_1$, $4_2$) forms a small acute angle relative to the radial side surface ($5_1$, $5_2$).

5. A disc wheel according to one of the preceding claims, characterised in that the component parts ($1_1$, $1_2$, $8_1$, $8_2$, 9, 3) of the disc wheel are bonded together.

**Revendications**

1. Roue pleine comprenant un moyeu de roue (1), un bandage de roue (3) et un disque de roue rigide à la flexion reliant le moyeu de roue (1) et le bandage de roue (3), le disque de roue étant composé de deux disques de recouvrement ($8_1$, $8_2$) et d'un corps (9) de transmission de poussée rigide au cisaillement disposé entre les deux disques et le bandage de roue (3) et le moyeu de roue (1) étant reliés aussi bien aux disques de recouvrement ($8_1$, $8_2$) qu'au corps (9) de transmission de poussée, caractérisée en ce que le moyeu de roue (2) est divisé dans le sens axial en deux moitiés de moyeu ($1_1$, $1_2$) symétriques dont chacune possède à son bord se trouvant à l'extérieur dans le sens axial un rebord périphérique ($4_1$, $4_2$), et que les disques de recouvrement ($8_1$, $8_2$) sont reliés par une liaison à double cisaillement ($4_1$, $5_1$, $6_1$, $7_1$ ; $4_2$, $5_2$, $6_2$, $7_2$) aux rebords périphériques ($4_1$, $4_2$).

2. Roue pleine selon la revendication 1, caractérisée en ce que ladite roue pleine est fabriquée à partir d'une combinaison de métal et de matériaux renforcés par fibres, les moitiés de moyeu ($1_1$, $1_2$) avec les rebords périphériques ($4_1$, $4_2$) et le bandage de roue (3) étant réalisés en métal et les disques de recouvrement ($8_1$, $8_2$) étant réalisés en matériaux renforcés par fibres.

3. Roue pleine selon la revendication 1 ou 2, caractérisée en ce que les rebords périphériques ($4_1$, $4_2$) présentent des sections en triangle et comportent chacun une arête périphérique ($7_1$, $7_2$) orientée radialement vers l'extérieur et associée à la pointe du triangle, et que les disques de recouvrement ($8_1$, $8_2$) sont divisés dans la zone des rebords périphériques ($4_1$, $4_2$) dans le sens radial en deux languettes périphériques ($10_1$, $11_1$ ; $10_2$, $11_2$) qui sont en appui contre les faces latérales ($5_1$, $6_1$ ; $5_2$, $6_2$), orientées radialement vers l'extérieur, des rebords périphériques ($4_1$, $4_2$).

4. Roue pleine selon la revendication 3, caractérisée en ce que la face latérale ($5_1$, $5_2$), se trouvant à l'intérieur dans le sens axial, des rebords périphériques ($4_1$, $4_2$) s'étend perpendiculairement à l'axe de roue (A) et la face latérale ($6_1$, $6_2$), se trouvant à l'extérieur dans le sens axial, des rebords périphériques ($4_1$, $4_2$) forme un petit angle aigu avec la face latérale ($5_1$, $5_2$) radiale.

5. Roue pleine selon l'une quelconque des revendications précédentes, caractérisée en ce que les différents éléments ($1_1$, $1_2$, $8_1$, $8_2$, 9, 3) de la roue pleine sont collés les uns aux autres.